# EUROPEAN PATENT APPLICATION

(11) **EP 4 681 531 A2**
(43) Date of publication of application: **21.01.2026**
(21) Application number: 25189252.7
(22) Date of filing: 14.07.2025
(51) Int. Cl.: A01K 5/02, A01K 15/02

(54) **PNEUMATIC FOOD EJECTOR**

(30) Priority: 15.07.2024 CN 202410950713
(71) Applicant: Ningbo Sincere Holding Group Co., Ltd., Ningbo, Zhejiang 315100 (CN)
(72) Inventor: LU, Wenguang, Ningbo City, 315100 (CN)
(74) Representative: Chung, Hoi Kan

(57) **Abstract**

A pneumatic food ejector is provided in the field of pet devices. The ej ector includes a housing and, installed within the housing, a feeding device, a pneumatic ejection device, a cleaning device, an ejection channel, and a controller. The feeding device delivers food into the ejection channel. The pneumatic ejection device ejects the food in the ejection channel out of the housing. The cleaning device cleans the ejection channel. The controller is connected to the pneumatic ejection device and to the cleaning device. This design addresses the technical problem in the prior art that, when using the potential energy of an elastic element as the power source for ejecting food, food debris easily affects the service life of the ejector.

## Description

### CROSS-REFERENCE TO RELATED APPLICATIONS

This application claims priority to Chinese Patent Application No. 202410950713.8, filed on July 15, 2024, the content of which is incorporated herein by reference in its entirety.

### TECHNICAL FIELD

The present application relates to the technical field of pet products, more particularly to a pneumatic food ejector.

### BACKGROUND

With the improvement of living standards and the increasing prevalence of pet ownership, traditional pet toys or feeders with single functionalities can no longer satisfy the diversified demands of the current market. In response, pet treat dispensers designed to meet the needs of pet entertainment, feeding, and interaction between pets and their owners have gradually emerged in the marketplace. However, in the prior art, food ejection mechanisms used for pet feeding and interactive functions primarily rely on elastic elements, such as compression springs, utilizing their potential energy as the power source for food ejection. The use of such elastic elements as the driving force tends to generate relatively high noise during food ejection. Additionally, since the resetting of the elastic element typically requires coordination with gear mechanisms, food crumbs and impurities can easily accumulate within these gear structures, thereby adversely affecting the service life of the device.

### SUMMARY

The objective of the present application is to provide a pneumatic food ejector, which aims to improve upon the prior art by addressing the technical problem wherein food particles and debris in food ejectors that utilize the potential energy of elastic elements as the power source for food ejection are prone to adversely affecting the service life of the device.

To achieve the above objective, the present application provides a pneumatic food ejector comprising a housing and, a feeding device, a pneumatic ejection device, a cleaning device, an ejection channel, and a controller which are all arranged within the housing.
wherein the housing is provided with a feeding port, wherein one end of the feeding device is communicated with the feeding port, wherein other end of the feeding device is communicated with the ejection channel, wherein the feeding device is configured to supply food into the ejection channel;
wherein the pneumatic ejection device is located at one end of the ejection channel and is configured to eject the food from the ejection channel out of the housing, wherein an air outlet of the cleaning device is communicated with the ejection channel;
wherein the controller is connected to the feeding device, the pneumatic ejection device, and the cleaning device.

Furthermore, in some embodiments of the present application, the pneumatic ejection device ejects the food via a pneumatic push rod; wherein the cleaning device is configured to clean the ejection channel by directing a stream of gas therethrough.

Furthermore, in some embodiments of the present application, the pneumatic ejection device further comprises an air pump, an air chamber, and a first air supply conduit, wherein the air chamber is communicated with the air pump, wherein one end of the first air supply conduit is communicated with an outlet of the air chamber, and the other end of the first air supply conduit is communicated with the pneumatic push rod, wherein a first solenoid valve is provided on the first air supply conduit;
a first sensor for detecting the air pressure inside the air chamber is provided in the air chamber.

Furthermore, in some embodiments of the present application, the cleaning channel has a second air supply conduit and an outlet, wherein one end of the second air supply conduit is communicated with the air chamber, and the other end of the second air supply conduit is communicated with the outlet; wherein the outlet is located on the ejection channel and is configured to blow air into the ejection channel;
a second solenoid valve is provided on the second air supply conduit.

The second solenoid valve is configured to open the second air supply conduit after the first solenoid valve actuates to open the first air supply conduit. The time delay between opening the first air supply pipeline and second air supply pipeline is no greater than 1 second and no less than 0.2 seconds.

Furthermore, in some embodiments of the present application, the air outlet is inclined toward a first end surface of the ejection channel, wherein the first end surface is proximate to the pneumatic ejection device, wherein the axis of the air outlet forms an acute angle with side wall of the ejection channel or with a cross-sectional plane of side wall of the ejection channel.

The present application provides a pneumatic food ejector which is powered by the pneumatic ejection device. The pneumatic ejection device uses air pressure as the driving force, without employing elastic elements to provide potential energy for food ejection, wherein no gears are arranged in the pneumatic ejection device, for avoiding contamination and jamming of gears caused by food debris, and preventing gear jamming from adversely affecting the service life of the food ejector. Meanwhile, the pneumatic food ejector utilizes high-pressure gas as the power source, resulting in low noise during food ejection. Additionally, the pneumatic food ejector provided further comprising a cleaning device which is configured to clean the ejection channel, thereby reducing the impact of food debris and impurities within the ejection channel on the pneumatic ejection device, and improving the service life and user experience of the pneumatic food ejector.

### BRIEF DESCRIPTION OF THE DRAWINGS

In order to more clearly explain the technical solutions of the embodiments of the present disclosure, the following drawings that need to be used in the embodiments of the present disclosure will be briefly introduced. It should be understood that the following drawings only illustrate certain embodiments of the present disclosure, and therefore should not be regarded as limiting the scope. For those skilled in the art, other related drawings can be obtained from these drawings without making inventive labor.
Figs. 1-3 is a schematic structural diagrams of the internal structure of the housing of the pneumatic food ejector provided in some embodiments of the present application.
Fig. 4 is a sectional view of the pneumatic food ejector provided in some embodiments of the present application.
Fig. 5 is an enlarged view of portion A of Fig. 4.
Fig. 6 is a schematic overall structural diagram of the pneumatic food ejector provided in some embodiments of the present application.
Fig. 7a is a schematic diagram illustrating an embodiment in which the limiting gate structure is inserted and used according to some embodiments of the present application.
Fig. 7b a schematic diagram illustrating an embodiment in which the limiting gate structure is not inserted or has been removed according to some embodiments of the present application.
Fig. 8a and 8b are schematic diagrams illustrating feeding inlets for different sizes of food pellets according to some embodiments of the present application.
Fig. 9a and 9b are schematic diagrams illustrating storage arrangements for the limiting gate structure according to some embodiments of the present application.
Fig. 10a is a schematic diagram of a pet rolling ball according to some embodiments of the present application.
Fig. 10b is a cross-sectional view of the internal structure of the pet rolling ball according to some embodiments of the present application.
Fig. 10c is an exploded view of the internal structure of the pet rolling ball according to some embodiments of the present application.

### DETAILED DESCRIPTION OF THE EMBODIMENTS

The technical solutions of the present application are described below clearly and completely in conjunction with embodiments. It is apparent that the described embodiments are merely some embodiments of the present application, rather than all embodiments. Based on the embodiments disclosed herein, all other embodiments obtained by those skilled in the art without inventive effort shall fall within the scope of the present application.

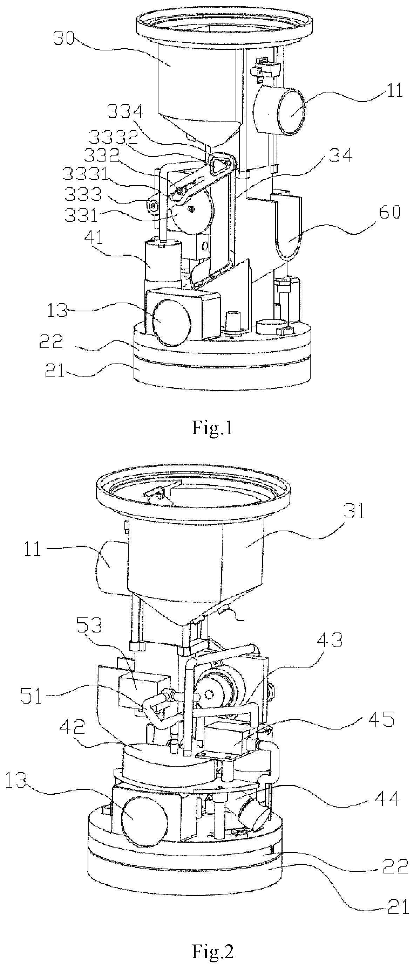

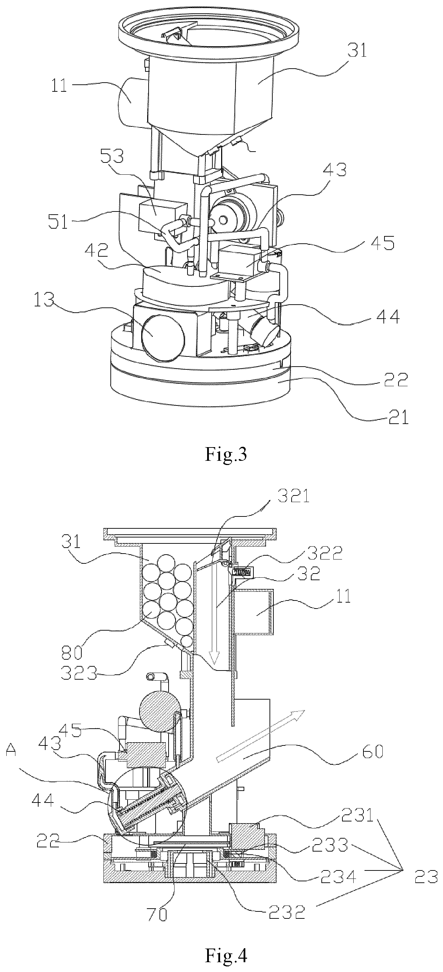

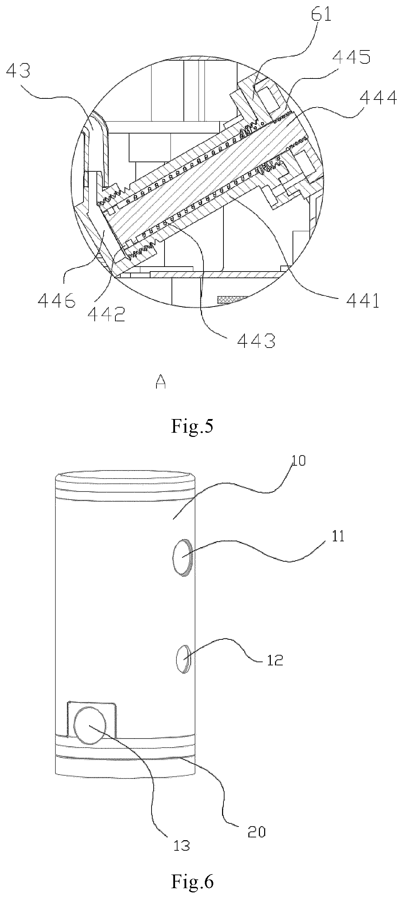

The present application provides a pneumatic food ejector, referring to Figs. 1-6, which comprises a housing 10 and a feeding device 30, a pneumatic ejection device 40, a cleaning device 50, an ejection channel 60, and a controller 70, which are all arranged within the housing.

The feeding device 30 includes a feed hopper 31, wherein the feed hopper 31 comprises a feeding inlet and a discharge outlet, wherein the feeding inlet is communicated with the feeding port. Food 80 contained into the housing 10 directly enters the feeding inlet through the feeding port, and then passes through the discharge outlet into the ejection channel 60.

In some embodiments, the feed hopper 31 is integrally formed with or fixedly connected to the housing 10. In such cases, the feeding port and the feeding inlet are formed as a single integrated structure. Preferably, the feed hopper 31 is integrally formed with or fixedly connected to the housing 10, which reduces openings on the housing 10 and minimizes the entry of airborne contaminants or food debris from the food 80 into the space between the housing 10, the feed hopper 31, and the ejection channel 60.

In some embodiments, the feeding device further includes a feed channel 32. The food 80 enters the feed channel 32 through the discharge outlet of the feed hopper 31, and then passes through the feed channel 32 into the ejection channel 60. The connection between the feed channel 32 and the feed hopper 31 is configured to be adjustable or movable, so as to control the flow of the food 80 from the feed hopper 31 into the feed channel 32.

In the present application, the feed hopper 31 functions not only as a feeding component but also provides a storage function for the food 80. By adjusting the connection relationship between the feed hopper 31 and the feed channel 32, it is possible to control whether the food 80 enters the feed channel 32 and to control the amount of food 80 delivered into the feed channel.

In some embodiments, the feeding device further comprises a feed driver configured to drive the feed channel 32 to move upward and downward along the inner sidewall of the housing 10. The feed hopper 31 is communicated with the feeding port, and the feed channel 32 is disposed on one side of the feed hopper 31. The feed hopper 31 and the feed channel 32 are separated by a sidewall of the feed channel 32 that is adjacent to the feed hopper 31, and the feed hopper 31 and the upper end of the feed channel 32 are communicated with each other. The feeding actuator is coupled with the controller 70.

In some embodiments, the feed hopper 31 has a funnel-shaped structure with a larger upper end and a smaller lower end, and the feed hopper 31 is defined by at least one inclined sidewall and a sidewall of the feed channel 32. Accordingly, when the feed channel 32 moves downward, the food 80 in the feed hopper 31 enters the feed channel 32 through a top inlet of the feed channel 32, and then passes through a discharge outlet at the lower end of the feed channel 32 into the ejection channel 60. By controlling the downward movement distance of the feed channel 32, the amount of the food 80 entering the feed channel 32 from the feed hopper 31 can be controlled, thereby controlling the amount of the food 80 ejected into the ejection channel 60.

In some embodiments, an output shaft of the feeding driver is connected to a rotating wheel 331. An eccentric shaft 332 is provided on the rotating wheel 331 and is connected to the feed channel 32 via a linkage rod 333. The linkage rod 333 is provided with a waist-type hole and a connecting hole. The eccentric shaft 332 is movably connected to the linkage rod 333 through the waist-type hole. The feed channel 32 is provided with a connecting pin 3334, and the connecting pin 3334 is rotatably connected to the linkage rod 333 through the connecting hole.

In other embodiments, an output shaft of the feeding driver is connected to a rotating wheel 331. An eccentric shaft 332 is provided on the linkage wheel 331. The eccentric shaft 332 is connected to the feed channel 32 via a connecting rod 333. The linkage rod 333 is provided with an R-shaped hole 3331 and a triangular hole 3332. The eccentric shaft 332 is movably connected to the linkage rod 333 through the R-shaped slot 3331. The feed channel 32 is provided with a connecting pin 334, which is rotatably connected to the connecting rod 333 through the triangular slot 3332.

The connecting pin 334 is provided on the side wall of the feed channel 32. A second housing is provided outside the feed channel 32 to restrict the feed channel 32 moves upward and downward. The second housing is formed a sliding through hole 34 that extends in the moving direction of the feed channel 32. The connecting pin 334 extends through the sliding through hole 34 and is connected to the linkage rod 333. When the feed driver drives the feed channel 32 to move upward and downward, the feed driver rotates the output shaft, thereby driving the rotating wheel 331 to rotate. The eccentric shaft 332 mounted on the rotating wheel 331 drives the linkage rod 333 to move, which in turn drives the connecting pin 334 to move along the sliding through hole 34, thereby enabling the feed channel 32 moves upward and downward.

The feed driver can be any one of a pneumatic rod, a hydraulic rod, or an electric rod, which is configured to drive the feed channel 32 to move vertically.

Preferably, a movable baffle 321 is provided at an upper portion of the feed channel 32, and a first driver 322 is configured to drive the movable baffle 321 to rotate. The movable baffle 321 is positioned below the upper end surface of the feed channel 32 and is used to control the amount of the food 80 entering the feed channel 32. The movable baffle 321 is located at the upper portion of the feed channel 32, and below the top inlet of the feed channel 32, such that the movable baffle 321 and the upper side wall of the feed channel 32 define a space capable of holding a small quantity of the food 80. When the feed channel 32 moves downward to its lowest position, the food 80 from the feed hopper 31 enters the feed channel 32 through the top inlet. As the feed channel 32 subsequently moves upward, any excess the food 80 at the top of the feed channel 32 returns to the feed hopper 31 due to inclined surface. The first driver 322 is then activated to rotate the movable baffle 321, causing the food 80 retained on the baffle 321 to fall into the ejection channel 60 in preparation for ejection. This configuration allows for more precise control of the amount of the food 80 discharged each cycle by the feed channel 32, and the filling level of the food 80 in the feed hopper 31 has minimal impact on the quantity of the food 80 discharged (unless the food 80 in the feed hopper 31 is already less than the quantity required for one discharge cycle). Moreover, the configuration facilitates automatic control without the need to install sensors on the movable baffle 321 to detect whether the food 80 has entered the feed channel 32, thereby simplifying the overall structure and improving durability.

wherein the movable baffle 321 can be configured to rotate about a rotational axis which is defined by the central axis of the movable baffle 321 under the driving force of the first driver 322, or alternatively, pivot about a rotational axis located at a side edge of the movable baffle 321 under the driving force of the first actuator 322 to return to its original position. Prior to the downward movement of the feed channel 32, or during the downward movement but before the feed channel 32 returns to its highest position, the movable baffle 321 remains in a horizontal orientation or in an orientation substantially parallel to the horizontal plane to allows the food 80 to enter the feed channel 32 and remain supported on the movable baffle 321, thereby enabling a metered discharge with each cycle.

It is particularly noteworthy that, in one embodiment of the present invention, consideration has been given to the shortcomings of similar products currently available on the market, wherein the size of the discharge outlet is fixed. In order to reduce manufacturing costs, such device typically employs a single discharge outlet size that is intended to accommodate both large and small grain-type food particles. Under such circumstances, larger food particles are prone to become jammed at the discharge outlet, resulting in failure to discharge smoothly and consequent failure of the ejection process. Conversely, for smaller food particles, the discharge outlet is often excessively large, and mechanical tolerances during operation may cause instability in each adjustment cycle, leading to an excessive number of food particles being discharged and ejected during a single operation. In severe cases, this number may exceed 60 particles per cycle. This can result in the pet being unable to consume the food within a short period of time or consuming an excessive amount, thereby causing food to accumulate on the ground and be wasted. Such outcomes not only diminish the pet's enjoyment of the play experience, but may also lead to unsanitary conditions and floor contamination within the user's home.

The present invention specifically addresses this demand scenario by enabling effective control and adjustment of the dispensing quantity for food particles of varying sizes, without altering the fundamental structure of conventional the feed channel 32.

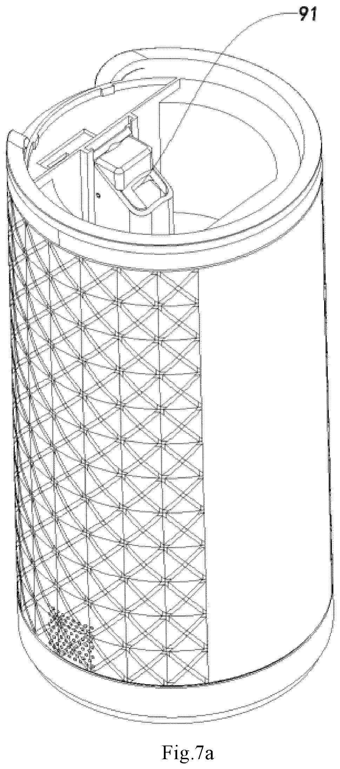

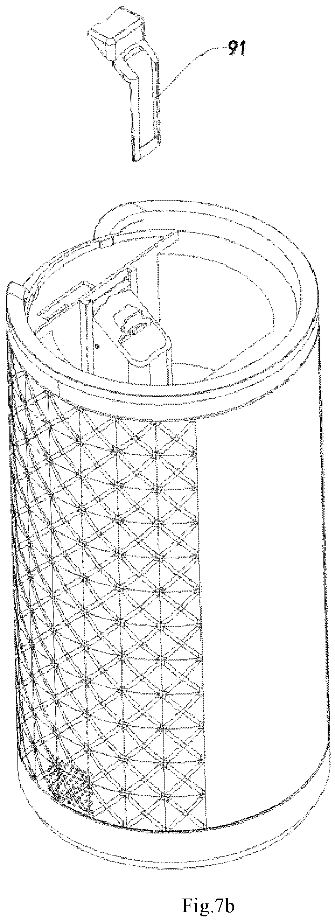

More specifically, as illustrated in FIG. 7, in the present application there is a limiting gate structure which is provided at the top opening of the feed channel 32. Through the limiting gate structure, the food ejector in the present technical solution can flexibly accommodate the size of the food particles being dispensed, thereby accommodating food of various particle sizes, including both large and small grains. When it is necessary to eject large-sized food particles, the limiting gate structure or a top inlet of the feed channel 32 having a relatively large opening may be selected. For example, the limiting gate structure or the top inlet preferably is implemented an approximately rectangular opening with a side length in the range of 12 mm to 25 mm. When ejecting small-sized food particles, a limiting gate structure having a smaller opening is preferably selected, the limiting gate structure preferably is implemented an approximately rectangular opening with a side length in the range of 5 mm to 12 mm. This configuration enables effective control over the number of food particles dispensed per ejection cycle, preferably limiting the quantity to approximately 1 to 10 particles, thereby achieving a consistent and well-regulated feeding effect. FIG. 7 illustrates two states: one in which the limiting gate structure is not inserted into the top opening of the feed channel 32, and another in which it is inserted.

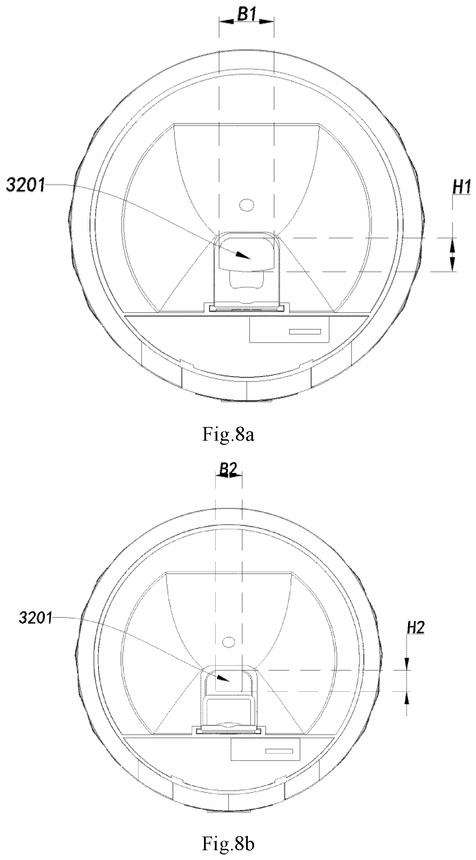

5mm∼12mm_{∘} Referring to FIG. 8, when it is necessary to eject large-sized food particles, the limiting gate structure may be omitted, and original top inlet of the feed channel 32 may be used alone. In this case, the top inlet has an approximately rectangular shape with a width dimension B1 and a height dimension H1, wherein B1 and H1 are preferably in the range of 12 mm to 25 mm.

Furthermore, the limiting gate structure may be fixedly installed at the top opening of the feed channel 32, or alternatively, the limiting gate structure may be configured to be removably mounted at the top opening of the feed channel 32. In instances where the quantity-limiting gate is fixedly installed at the top opening, it is preferable that the opening size of the gate is adjustable. No particular limitation is placed on the manner of adjustment, so long as the implemented technical solution allows the opening size to be increased or decreased as needed.

In a preferred embodiment of the present invention, the limiting gate structure having a removable small-sized opening is provided. When the food ejector is required to dispense and eject smaller-sized food particles, the limiting gate structure with the small opening is inserted at the top inlet of the feed channel 32 to reduce the opening size of the top inlet. Preferably, the adjusted opening is approximately rectangular with a side length in the range of 5 mm to 12 mm, thereby enabling control over the number of food particles dispensed per ejection cycle, preferably limiting it to approximately 1 to 10 particles.

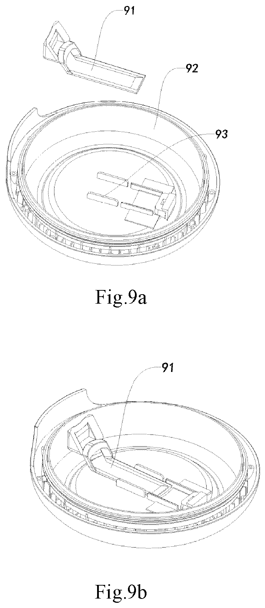

Further, referring to FIG. 9, after the user completes the ejection operation involving small-sized food particles, and when it becomes necessary for the food ejector to dispense and eject larger-sized food particles, the limiting gate structure is typically removed. In such cases, the limiting gate structure having the small-sized opening may be detached and stored. Once the grain ejector is subsequently activated, food particles will directly pass through the top inlet of the feed channel 32 and proceed to the area above the movable baffle 321. Preferably, the top inlet has an approximately rectangular shape with a side length in the range of 12 mm to 25 mm.

The limiting gate structure with the small-sized opening, once removed, may be stored within a top cover portion of the grain ejector. Preferably, the top cover is provided with a designated storage area configured to accommodate the quantity-limiting gate structure. For example, the cover may include retaining features such as storage ribs or grooves corresponding in shape to the gate structure, allowing for secure insertion and retention. This configuration facilitates convenient storage of the gate when not in use and prevents loss of the component by the user.

Furthermore, the combination of the small-sized limiting gate structure and the feed channel 32 may be implemented as a detachable magnetic connection at the top portion of the fees channel 32. Specifically, mutually attractive magnetic elements may be respectively disposed on the lower portion of the upper end of the limiting gate structure and at the corresponding interface location on the top of the feed channel 32. Similarly, magnetic retention may also be employed for storing the small-sized limiting gate structure within the top cover, thereby simplifying user operation and reducing the likelihood of misplacement.

In other embodiments, the connection relationship between the feed hopper 31 and the feed channel 32 may be controlled by a movable plate that is automatically actuated to rotate. In this embodiment, the movable plate is operatively connected to a drive member configured to rotate the movable plate, and the drive member is electrically coupled to the controller 70. The controller 70 is configured to control the actuation and operation duration of the drive member, thereby regulating the amount of the food 80 discharged from the feed hopper 31 into the feed channel 32. In this embodiment, the movable plate is positioned directly at the lower end of the feed hopper 31 and at the upper end of the feed channel 32. When the drive member actuates the movable plate to rotate, the plate pivots, then establishing communication between the discharge outlet at the bottom of the feed hopper 31 and the feed channel 32, allowing the food 80 to enter the feed channel 32. When the drive member continues to rotate the movable plate or reverses its direction, the discharge outlet of the feed hopper 31 is no longer in communication with the feed channel 32, preventing the food 80 from entering the feed channel 32 and interrupting the feeding process. By controlling the rotation frequency and duration of the drive member, the amount and frequency of the food 80 entering the feed channel 32 can be precisely regulated.

he movable plate can also be positioned between the feed hopper 31 and the feed channel 32, such that the lower end of the movable plate is contacted with or separated from the lower end of the feed hopper 31 under the actuation of a drive member. When the drive member rotates the movable plate, the lower end of the movable plate is separated from the lower end of the feed hopper 31, thereby forming a gap that allows the food 80 to pass through and enter the feed channel 32. When the drive member actuates the movable plate to return to its original position, the lower end of the movable plate comes into contact with the lower end of the feed hopper 31, thereby preventing the food 80 from entering the feed channel 32 and interrupting the feeding process. By controlling the rotation frequency and operation duration of the drive member, the amount and frequency of the food 80 entering the feed channel 32 can be regulated.

In some embodiments, an agitating member 323 is provided at the lower portion of the feed hopper 31. The agitating member 323 comprises a second driver and an agitating blade connected to the output shaft of the second driver. The agitating member 323 is operatively coupled to the controller 70. This configuration helps prevent situations where, when the amount of the food 80 in the feed hopper 31 is relatively low, the food 80 has difficulty entering the feed channel 32, thereby reducing the risk of clogging.

The first driver, the drive member, and the second driver can be any one of a pneumatic rod, a hydraulic rod, or an electric rod.

In some embodiments, the pneumatic ejection device 40 ejects the food 80 using a pneumatic push rod 44. The pneumatic ejection device 40 further comprises an air pump 41, an air chamber 42, and a first air supply conduit 43. The air chamber 42 is communicated with the air pump 41. One end of the first air supply conduit 43 is communicated with an outlet of the air chamber 42, and the other end is communicated with the pneumatic push rod 44. A first solenoid valve 45 is disposed on the first air supply conduit 43. A first sensor is configured to detect the air pressure within the air chamber 42 is arranged inside the air chamber 42. The first sensor, the first solenoid valve 45, and the air pump 41 are respectively coupled with the controller 70.

The air pump 41 is configured to pump air into the air chamber 42 to increase the internal pressure of the air chamber 42. The first sensor is configured to detect the pressure within the air chamber 42 and transmit the pressure data to the controller 70. The controller 70 determines whether to activate the first solenoid valve 45 based on the detected pressure in the air chamber 42 and whether a command to eject the food 80 has been received. The first solenoid valve 45 is used to control the opening and closing of the first air supply conduit 43. When the first air supply conduit 43 is closed, the air within the air chamber 42 cannot enter the pneumatic push rod 44, and the food 80 is not ejected. When the first air supply conduit 43 is open, the air from the air chamber 42 flows into the pneumatic push rod 44, causing the food 80 to be ejected from the housing 10.

The controller 70 is configured to determine whether to activate the first solenoid valve 45 based on whether a command to eject the food 80 has been received only when the air pressure within the air chamber 42 reaches at least 100 kPa. If the air pressure within the air chamber 42 is below 100 kPa, the controller 70 does not activate the first solenoid valve 45.

When the air pressure within the air chamber 42 is excessively high, for example, exceeds 200 kPa, the controller 70 shuts off the air pump 41 based on the pressure data received from the first sensor, in order to prevent the air pressure in the air chamber 42 from becoming excessively high and posing a safety hazard.

The pneumatic push rod 44 comprises a cylinder body 441, a compression spring 443 disposed within the cylinder body 441, and a ram rod 444. The compression spring 443 is sleeved around the ram rod 444. The ram rod 444 includes a rod body and a top plate 445 located at one end of the rod body. The end of the rod body far away from the top plate is provided with a limiting structure 442 which is configured to restrict the axial position of the compression spring 443 within the cylinder body 441. The limiting structure 442 may be an annular limiting structure, a C-shaped limiting structure, or a plurality of protrusions arranged in an annular array. The compression spring 443 may be fixedly or non-fixedly connected to the limiting structure 442. The end of the ram rod 444 far away from the limiting structure 442 extends out of the cylinder body 441 and is fixedly connected to the top plate 445.

The end of the ram rod 444 at which the limiting structure 442 is disposed, together with the end of the cylinder body 441 far away from the top plate 445 and the sidewall of the cylinder body 441, defines a gas receiving chamber 446. The ram rod 444 is slidably connected to the inner side wall of the cylinder body 441.

The top plate 445 is positioned at the first end surface 61 of the ejection channel 60, and the shape and area of the top plate 445 are identical to the first end surface 61, so as to prevent the food 80 from falling through any gap between the top plate 445 and the sidewall of the ejection channel 60 into the space between the top plate 445 and the first end surface 61, which could otherwise influence the return movement of the top plate 445 and increase the accumulation of grain debris within the ejection channel 60.

It should be noted that the sliding connection between the ram rod 444 and the inner side wall of the cylinder body 441 is to be understood as the inner surface of the cylinder body 441 being smooth, and the outer surface of the limiting structure 442 also being smooth. The limiting structure 442 is configured to be in near-tight contact with the inner sidewall of the cylinder body 441, so as to avoid high-pressure gas entering the gas receiving chamber 446 and rapidly flowing into the space defined between one end of the rod body and the cylinder body 441, so that the pressure differential on both sides of the limiting structure 442 rapidly reduces, thereby affecting the impact force of the pneumatic push rod 44.

One end of the compression spring 443 is connected to the end of the cylinder body 441 far away from the gas receiving chamber 446, and the other end is connected to the limiting structure 442. In an unstressed state, the compression spring 443 is not compressed. When high-pressure gas enters the gas receiving chamber 446, the internal pressure of the gas receiving chamber 446 increases rapidly, causing the compression spring 443 to compress quickly and the ram rod 444 to be rapidly driven out of the cylinder body 441, to drive the top plate 445 to push the food 80 disposed on the top plate 445, thereby ejecting the food 80. After the ejection is completed, due to the imperfect sealing between the cylinder body 441 and the gas receiving chamber 446, the pressure inside the gas receiving chamber 446 gradually equalizes with the external atmospheric pressure. As a result, the compression spring 443 returns to its original state, thereby retracting the ram rod 444 and the top plate 445, preparing the mechanism for the next grain ejection cycle.

In some embodiments, after the pneumatic push rod 44 ejects the grain and before the cleaning device 50 blows air to clean the grain ejection channel, the air pressure within the air chamber 42 remains above atmospheric pressure. The cleaning device 50 utilizes the residual gas remaining in the air chamber 42 after the pneumatic push rod 44 ejects the food 80 to blow air and clean ejection channel 60 which is used to eject the food 80.

The second solenoid valve 53 opens the second air supply conduit 51 after the first solenoid valve 45 opens the first air supply conduit 43. The time difference between the opening of the second air supply conduit 51 by the second solenoid valve 53 and the opening of the first air supply conduit 43 by the first solenoid valve 45 is not greater than 1 second and not less than 0.2 seconds.

When the second solenoid valve 53 opens the second air supply conduit 51, the first solenoid valve 45 does not close the first air supply conduit 43. As a result, the pressure within the air chamber 42, the pneumatic push rod 44, and the first air supply conduit 43 remains above atmospheric pressure. Therefore, air from the air chamber 42, the pneumatic push rod 44, and the first air supply conduit 43 rapidly flows into the second air supply conduit 51 to blow and clean the ejection channel 60, while simultaneously enabling the ram rod 444 to quickly return under the restoring force of the compression spring 443.

In some embodiments, the cylinder body 441 is provided an exhaust port communicated with the gas receiving chamber 446. After the ejection is completed, the presence of the exhaust port allows the pressure within the gas receiving chamber 446 to gradually equalize with the external atmospheric pressure. As a result, the compression spring 443 returns to its original state, thereby driving the ram rod 444 and the top plate 445 to return to their initial positions in preparation for the next grain ejection cycle.

The aperture of the exhaust port should be neither too large nor too small. An excessively large exhaust port may cause the pressure within the gas receiving chamber 446 to drop too rapidly, resulting in insufficient impact force of the ram rod 444 and reduced ejection performance. Conversely, an excessively small exhaust port may lead to a slow release of gas, preventing the gas within the gas receiving chamber 446 from dissipating in a timely manner, thereby adversely affecting the return speed of the ram rod 444. The size of the exhaust port may be adjusted according to the dimensions of the gas receiving chamber 446. For example, the cross-sectional area of the exhaust port may be no greater than 1/100 of the cross-sectional area of the sidewall of the gas receiving chamber 446 where the exhaust port is located.

Furthermore, the exhaust port is located on the first end surface 61 and is positioned in a region covered by the top plate 445. This configuration prevents the gas within the gas receiving chamber 446 from easily leaking when the top plate 445 has not yet been displaced. Once the top plate 445 is pushed open, the exhaust port allows gas to be released, thereby enabling rapid pressure equalization between the gas receiving chamber 446 and the external environment. The top plate 445 then quickly returns to its original position under the restoring force of the compressed spring 443. After the top plate 445 returns, the exhaust port is covered again, preventing fine grain debris of the food 80 from passing through the exhaust port and entering the gas receiving chamber 446. The exhaust port is provided on the first end surface 61 that can also enhances the impact force of the pneumatic push rod 44. Additionally, The exhaust port is provided on the first end surface 61, can allows the gas from the gas receiving chamber 446 to enter the ejection channel 60 during the food ejection process, forming an airflow that cleans the ejection channel 60. This airflow helps prevent fine grain debris of the food 80 from falling between the top plate 445 and the first end surface 61 or even entering the cylinder body 441, thereby improving the operational reliability and service life of the pneumatic grain ejector.

Furthermore, the top plate 445 is magnetically connected to the first end surface 61, such that a detachable magnetic attraction force is present between the top plate 445 and the first end surface 61. This configuration allows the gas receiving chamber 446 to store energy during rapid pressurization. When the impact force generated by the high-pressure gas exceeds the attraction force of the magnetic, such as a magnetic strip, the top plate 445 separates from the first end surface 61. The breaking of the magnetic connection between the top plate 445 and the first end surface 61 enhances the impact force of the top plate 445, thereby further increasing the ejection distance of the food 80. In addition, after the ejection is completed, the top plate 445 gradually returns to its original position. As it approaches the first end surface 61, the magnetic attraction causes the top plate 445 to tightly adhere to the first end surface 61, resulting in an effective reset. This configuration also helps prevent unwanted shaking or displacement of the top plate 445 during movement of the pneumatic food ejector.

In particular, when the exhaust port is located on the first end surface 61, it further helps to prevent fine grain debris of the food 80 from entering the space between the top plate 445 and the first end surface 61, or from entering the exhaust port itself.

The ejection channel 60 is disposed at an incline, with the pneumatic push rod 44 positioned at the lower end of the ejection channel 60, and the higher end of the ejection channel 60 in communication with the discharge port 12. The term "lower end" refers to the end relatively closer to the ground, while the term "higher end" refers to the end relatively farther from the ground.

The ejection channel 60 is arranged at an incline such that the ejected food 80 follows a parabolic trajectory, making its flight path more visually apparent. Preferably, the axis of the ejection channel 60 forms an angle of 45 to 60 degrees with the horizontal ground plane.

In some embodiments, the cleaning channel comprises a second air supply conduit 51 and an air outlet 52. One end of the second air supply conduit 51 is in communication with the air chamber 42, and the other end is in communication with the air outlet 52. The air outlet 52 is disposed on the ejection channel 60 and is configured to direct airflow into the ejection channel 60. A second solenoid valve 53 is provided on the second air supply conduit 51.

The cleaning device 50 and the pneumatic ejection device 40 share a common air pump 41 and air chamber 42. By using a single set of the air pump 41 and air chamber 42 to supply air pressure, the system not only conserves space and reduces the number of components-thereby enabling a more compact and lightweight design of the pneumatic grain ejector-but also reduces overall cost. Additionally, the air supplied by the air pump 41 and air chamber 42 can also provide the pressure for the air discharged from the air outlet 52, thereby enhancing the cleaning effectiveness.

Of course, if miniaturization, weight reduction, and cost are not primary considerations, the cleaning device 50 may alternatively be provided with a separate air pump 41 and air chamber 42 to supply gas to the second air supply conduit 51 for cleaning the ejection channel.

In some embodiments, the air outlet 52 is inclined toward the first end surface 61 of the ejection channel 60, which is adjacent to the pneumatic ejection device 40. The axis of the air outlet 52 forms an acute angle with either the sidewall of the ejection channel 60 (when the sidewall is planar) or a tangent plane of the sidewall (when the sidewall is curved). That is, the direction of the airflow discharged from the air outlet 52 forms an acute angle not only with the first end surface 61 but also with the sidewall or the tangent plane of the sidewall of the ejection channel 60. This configuration promotes the formation of a swirling vortex within the ejection channel 60, thereby enhancing the cleaning effectiveness of the airflow. Preferably, the acute angle is in the range of 30 to 65 degrees.

In other embodiments, the cleaning device 50 may alternatively utilize an air outlet provided on the first end surface 61 of the pneumatic push rod 44, such that the airflow discharged from the air outlet is used to clean the ejection channel 60. This configuration offers a simpler structure.

In some embodiments, the first air supply conduit 43 and the second air supply conduit 51 are in communication with the air chamber 42 via a main conduit.

In some embodiments, the pneumatic grain ejector further comprises a base 20 and a driving device 23 mounted on the base 20. The driving device 23 drives the housing 10, as well as the feeding device 30, the pneumatic ejection device 40, the cleaning device 50, and the ejection channel 60 within the housing 10, to rotate about an axis of the housing 10 that is perpendicular to the ground.

The base 20 and the housing 10 may be detachably connected to facilitate assembly and disassembly of the pneumatic grain ejector. The detachable connection may be achieved by fasteners such as bolts, by snap-fit connections, or by other suitable connection means.

The housing 10 is provided with a bottom plate, and the feeding device 30, pneumatic ejection device 40, and cleaning device 50 are all disposed within the internal space of the housing 10 having the bottom plate. A rotating shaft is provided on the bottom plate of the housing 10, wherein the axis of the rotating shaft is collinear with the axis of the bottom plate of the housing 10. The driving device 23 drives the rotating shaft to rotate, thereby causing synchronous rotation of the housing 10 and the feeding device 30, pneumatic ejection device 40, and cleaning device 50 within the housing 10, enabling a change in the ejection direction.

The driving device 23 comprises a driver, a rotating shaft, a first gear 233, and a second gear 234. The output shaft of the driver is connected to the first gear 233, and the first gear 233 meshes with the second gear 234. The second gear 234 is sleeved on the rotating shaft and is fixedly connected to the rotating shaft's rotational axis 232.

In other embodiments, the base 20 comprises a fixed base 21 and a rotating seat 22. The rotating seat 22 is positioned above the fixed base 21 and is connected thereto via a rotating shaft 232. The axis of the rotating shaft 232 is collinear with the axis of the fixed base 21.

The driving device 23 comprises a third driver 231, a rotating shaft 232, a first gear 233, and a second gear 234. The output shaft of the third driver 231 is connected to the first gear 233, and the first gear 233 meshes with the second gear 234. The second gear 234 is sleeved on the rotating shaft 232 and is fixedly connected to the rotational axis 232 of the rotating shaft 232. The third driver 231 and the first gear 233 are mounted on the rotating base 22, while the rotating shaft 232 and the second gear 234 are mounted on the fixed base 21. The third driver 231 and the first gear 233 rotate about the axis of the rotating shaft 232.

The housing 10, along with the feeding device, the pneumatic ejection device 40, and the cleaning device 50 disposed within the housing 10, are mounted on the rotating base 22.

In some embodiments, to further enhance interaction between a pet and its owner, and to enable remote control of the pneumatic grain ejector, the housing 10 is further provided with an ejection information acquisition device. The ejection information acquisition device is connected to the controller 70. The ejection information acquisition device includes one or more of a camera 11 for capturing images of the pet and an audio device for collecting sound.

The camera 11 and/or the audio device are connected to the controller 70.

The camera 11 may be used to capture images of the pet and transmit them to the controller 70. The controller 70 determines whether to automatically eject the food 80 based on the captured images. The audio device may collect voice commands from the owner and/or play sounds of the owner or animal, transmitting such information to the controller 70. The controller 70 determines whether to automatically eject the food 80 based on the owner's voice commands. The audio device includes not only a microphone for receiving voice but may also include a voice device 13 for playing sounds of the owner or the animal.

The controller 70 is further provided with a wireless communication module configured to transmit interactive signals via radio signals with a remote terminal using the wireless communication module. The remote terminal may be a mobile phone, tablet, laptop computer, desktop computer, or the like.

It is particularly noteworthy that current similar products on the market primarily employ three control methods to trigger the grain ejection function: (1) the pet owner manually presses a mechanical switch to trigger the function; (2) the pet owner uses a remote control device; and (3) the pet owner controls the product via a mobile phone app. However, all three of these control methods lack direct interactive play functionality between the pet and the grain ejector, which is detrimental to stimulating the pet's natural interactive behavior and greatly reduces the pet's enjoyment during play.

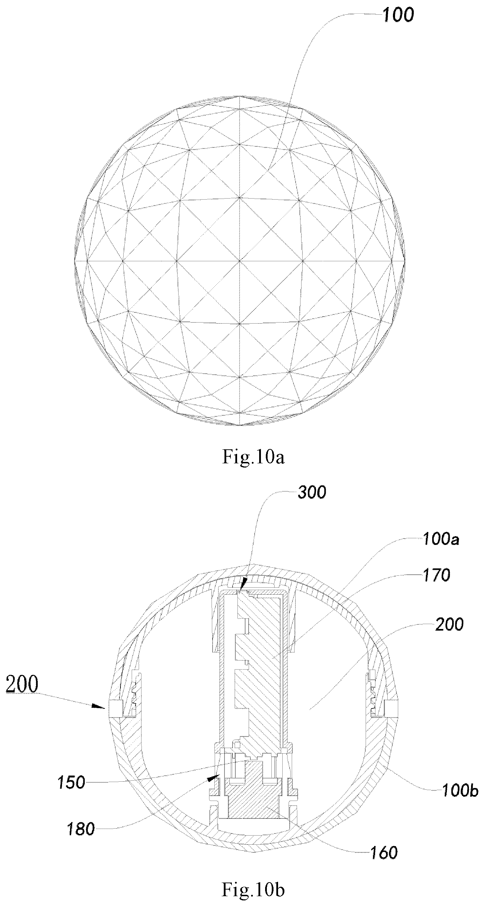

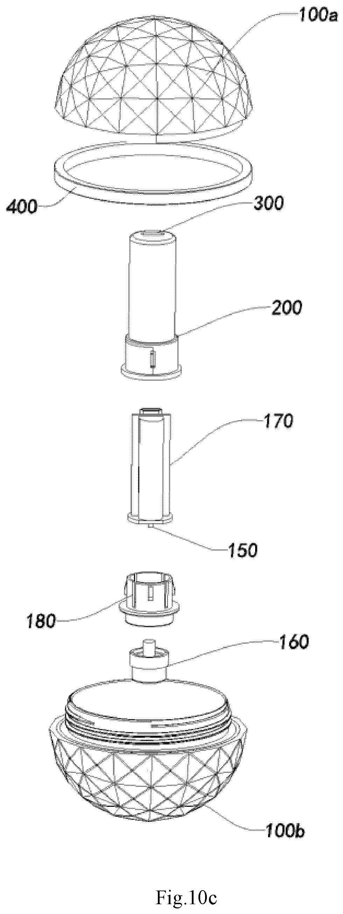

Accordingly, with reference to Figures 10a, 10b, and 10c, the embodiment of the present invention proposes a technical solution that more effectively stimulates the pet's natural interactive behavior and increases direct interaction between the pet and the grain ejector.

More specifically, in this technical solution, a pet rolling ball capable of interactive connection with the grain ejector is added. When the pet plays with the rolling ball and places the ball within a certain range near the grain ejector, the grain ejector establishes a wireless connection with the pet rolling ball, enabling the grain ejector to receive or transmit communication signals to the pet rolling ball. At this time, if the pet touches the rolling ball and causes it to roll freely on the ground, the pet rolling ball can collect data signals related to the pet's play, which can be used to trigger more direct interaction between the pet and the grain ejector based on these data signals.

In some embodiments, when the pet rolling ball continuously rolls for a predetermined period of time (e.g., 10 seconds), the pet rolling ball transmits a wireless signal to the grain ejector, thereby triggering the ejector to activate and perform the grain ejection operation.

In some embodiments, the pet rolling ball is equipped with a built-in vibration sensor, a microcontroller, and a wireless radio frequency (RF) module. When the ball is rolling, the microcontroller counts the number of vibrations or measures the vibration duration. When the vibration count or duration reaches a predetermined threshold, the microcontroller transmits a wireless signal to the grain ejector via the wireless RF module, thereby triggering the ejector to perform the grain ejection operation.

The vibration count or vibration duration may be preset or freely set by the user. More importantly, the technical solution of the present invention can associate and bind the signal issuance from the pet rolling ball with the pet's play actions. For example, the association may be set by correlating the pet's light presses on a button on the rolling ball with the ball's vibration. When the pet presses the rolling ball's button twice consecutively, the rolling ball triggers a vibration lasting 20 seconds and, upon completion of the vibration, transmits a signal command to the grain ejector. When the pet presses the button three times consecutively, the vibration duration is set to 30 seconds before the rolling ball transmits the signal command.

Regarding the specific hardware structure design, the pet rolling ball includes an upper shell and a lower shell, each having a hemispherical shape. The upper and lower shells can be connected and fixed via a threaded connection or a snap-fit structure. An internal cavity is formed between the upper and lower shells, within which are installed a micro switch, a switch button, a printed circuit board assembly (PCBA), a mounting base for the PCBA, a power supply, and the like. The micro switch is connected to the switch button and is configured to detect the pet's interaction with the rolling ball. The PCBA module is configured to evaluate and count the detection results of the pet's actions and, based on the evaluation, control signal transmission to establish a communication connection with the grain ejector.

A transparent tube is sleeved over the exterior of the PCBA to protect the internal circuitry. An LED lighting device may also be arranged inside the transparent tube to trigger lighting effects. The light emitted by the LED passes through a transparent light-transmitting ring provided between the upper and lower shells, enhancing the pet's play experience. To achieve the light transmission effect, components along the optical path inside the rolling ball are designed as transparent elements.

Of course, the above-described technical solutions for enhancing direct interaction between the pet and the grain ejector are merely preferred embodiments. Those skilled in the art may make appropriate modifications and variations in actual products based on the technical concepts of the present invention without departing from the core content of the present invention.

In some embodiments, a distance measuring device is further provided on the housing 10. The distance measuring device is connected to the controller 70 and determines whether to eject the food 80 by measuring the distance between the pet and the pneumatic grain ejector.

Further, a switch button or switch key connected to the controller 70 may be provided on the surface of the housing 10 to control the controller 70 to send commands to the feeding device, pneumatic ejection device 40, and/or the cleaning device 50, thereby enabling manual control of the food 80 ejection and/or cleaning of the ejection channel 60 of the pneumatic grain ejector.

In other embodiments, a display screen connected to the controller 70 may be provided on the housing 10. The display screen is configured to show the amount of grain 80 in the feeding hopper 31 (wherein the feeding hopper 31 may be equipped with weight-measuring devices such as pressure sensors), as well as the status of the pneumatic grain ejector. Additionally, the display screen may be used to display images of the pet owner during remote control of the pneumatic grain ejector.

It should be noted that the pneumatic grain ejector is provided with a battery and a corresponding charging interface. The charging interface is electrically connected to the battery for external power supply charging. The battery is electrically connected to the feeding device 30, pneumatic ejection device 40, cleaning device 50, controller 70, ejection information acquisition device, distance measuring device, switch button and/or switch key, display screen, and the driving device 23 on the base 20, for providing power.

The drivers, driving components, ejection information acquisition device, distance measuring device, display screen, and the like used in the present application are existing devices capable of performing the aforementioned functions. Therefore, their structures and models are not limited in the present application and do not affect the implementation of the present invention.

By way of example of certain embodiments, the operating principle of the pneumatic grain ejector provided in the present application is as follows:
(1) Controlling the pneumatic grain ejector to eject the food 80.
   The pet owner presses a switch key or switch button on the housing 10, or sends an ejection command via a remote terminal, or issues a voice command to eject. Upon receiving the ejection command, the controller 70 controls the feeding channel 32 to move downward to its lowest position, allowing the food 80 to enter onto the movable baffle 321 of the feeding channel 32. The controller then controls the feeding channel 32 to move upward to its highest position, causing any excess the food 80 on the movable baffle 321 to return to the upper feeding hopper. Subsequently, the first driver 322 drives the movable baffle 321 to rotate, causing the food 80 on the movable baffle 321 to fall from the feeding channel 32 into the ejection channel 60.
   The controller 70 controls the air pump 41 to start and inflate the air chamber 42. The first sensor detects the air pressure within the air chamber 42 and transmits the data to the controller 70. When the first sensor detects that the air pressure in the air chamber 42 reaches the preset pressure required for ejecting the food 80, the controller 70 opens the first solenoid valve 45. High-pressure gas flows from the first supply pipeline 43 into the gas receiving cavity 446 of the pneumatic top rod 44, driving the top rod 444 and top plate 445 to rapidly move upward, thereby ejecting the food 80 in the ejection channel 60. As the gas in the gas receiving cavity 446 dissipates, the top plate 445 and the top rod 444 reset, preparing for the next ejection.
(2) Controlling the pneumatic grain ejector to clean the ejection channel 60
   The pet owner presses a switch key or switch button on the housing 10, or sends a cleaning command via a remote terminal, or issues a voice command for cleaning. Upon receiving the cleaning command, the controller 70 controls the air pump 41 to start and inflate the air chamber 42. The first sensor detects the air pressure within the air chamber 42 and transmits the data to the controller 70. When the first sensor detects that the air pressure in the air chamber 42 reaches a preset pressure required for cleaning, the controller 70 opens the second solenoid valve 53. High-pressure gas flows from the second supply pipeline 51 into the air outlet 52, rapidly blowing the inner wall and first end surface 61 of the ejection channel 60.

In other embodiments, the controller 70 further includes a timing module configured to enable periodic automatic activation of the food 80 ejection and cleaning of the ejection channel.

Finally, it should be noted that the above embodiments are provided merely to illustrate the technical solutions of the present application and do not constitute any limitation thereof. Although the present application has been described in detail with reference to the foregoing embodiments, those skilled in the art should understand that modifications may still be made to the technical solutions described in the embodiments, or some or all of the technical features may be equivalently replaced. Such modifications or replacements do not cause the essence of the corresponding technical solutions to depart from the scope of the technical solutions of the embodiments of the present application.

## Claims

1. A pneumatic food ejector, comprising a housing and, a feeding device, a pneumatic ejection device, a cleaning device, an ejection channel, and a controller which are all arranged within the housing;
wherein the housing is provided with a feeding port, wherein one end of the feeding device is communicated with the feeding port, wherein other end of the feeding device is communicated with the ejection channel;
wherein the pneumatic ejection device is located at one end of the ejection channel and is configured to eject the food from the ejection channel out of the housing;
wherein an air outlet of the cleaning device is communicated with the ejection channel; wherein the controller is connected to the feeding device, the pneumatic ejection device, and the cleaning device.

2. The pneumatic food ejector according to claim 1, wherein the pneumatic ejection device ejects the food via a pneumatic push rod; wherein the cleaning device is configured to clean the ejection channel by directing a stream of gas therethrough.

3. The pneumatic food ejector according to claim 2, wherein the pneumatic ejection device further comprises an air pump, an air chamber, and a first air supply conduit, wherein the air chamber is communicated with the air pump, wherein one end of the first air supply conduit is communicated with an outlet of the air chamber, and the other end of the first air supply conduit is communicated with the pneumatic push rod, wherein a first solenoid valve is provided on the first air supply conduit;
a first sensor for detecting the air pressure inside the air chamber is provided in the air chamber; the cleaning channel has a second air supply conduit and an outlet, wherein one end of the second air supply conduit is communicated with the air chamber, and the other end of the second air supply conduit is communicated with the outlet; wherein the outlet is located on the ejection channel and is configured to blow air into the ejection channel;
wherein a second solenoid valve is provided on the second air supply conduit.

4. The pneumatic food ejector according to claim 3, wherein after the pneumatic push rod ejects the food and before the ejection channel is cleaned by the cleaning device, the air pressure within the air chamber remains above atmospheric pressure; The cleaning device then utilizes residual gas within the air chamber, remaining after the ejection of the food by the pneumatic push rod, to blow and clean the ejection channel;
wherein the second solenoid valve is configured to open the second air supply conduit after the first solenoid valve actuates to open the first air supply conduit; The time delay between opening the first air supply pipeline and second air supply pipeline is no greater than 1 second and no less than 0.2 seconds.

5. The pneumatic food ejector according to claim 3, wherein the air outlet is inclined toward a first end surface of the ejection channel, wherein the first end surface is proximate to the pneumatic ejection device, wherein the axis of the air outlet forms an acute angle with side wall of the ejection channel or with a cross-sectional plane of side wall of the ejection channel;
wherein the pneumatic push rod in some embodiments of the present application, the cylinder body is provided an exhaust port which is communicated with the gas receiving chamber;
wherein the exhaust port is located on the first end surface; herein the top plate is magnetically connected to the first end surface.

6. The pneumatic food ejector according to claim 5, wherein the pneumatic push rod in some embodiments of the present application, comprises a cylinder body, a compression spring installed inside the cylinder, and a ram rod, wherein the compression spring is sleeved around the ram rod, wherein ram rod includes a rod body and a ram plate, wherein one end of the rod body is provided with a limiting structure configured to restrict movement of the compression spring, and the other end of the rod body extends out of the cylinder body and is fixedly connected to the top plate;
wherein the end of the ram rod, which is provided with the limiting structure, together with the end of the cylinder body opposite to the ram rod and the side wall of the cylinder body, define a gas receiving chamber, wherein the ram rod is slidably connected to an inner side wall of the cylinder body;
wherein the top plate is positioned at the first end surface of the ejection passage, and the shape and area of the top plate are identical to those of the first end surface.

7. The pneumatic food ejector according to claim 6, wherein the housing is provided with a discharge port;
the ejection channel is arranged in an inclined manner, and the pneumatic push rod is located at a lower end of the ejection channel, and a higher end of the ejection channel is communicated with the discharge port.

8. The pneumatic food ejector according to claim 7, wherein the housing is provided with a discharge port;
wherein the ejection channel is arranged in an inclined manner, and the pneumatic push rod is located at a lower end of the ejection channel, and a higher end of the ejection channel is communicated with the discharge port.

9. The pneumatic food ejector according to claim 1, wherein the feeding device comprises a feed hopper, a feed channel, and a feed driver which is configured to drive the feed channel to move vertically along an inner side wall of the housing, wherein the feed hopper is communicated with the feed port, and the feed channel is disposed at one side of the feed hopper, wherein the feed hopper and the feed channel are separated by a side wall of the feed channel that is proximate to the feed hopper, and the upper end of the feed channel is communicated with the feed hopper;
wherein the feed driver is coupled with the controller.

10. The pneumatic food ejector according to claim 9, wherein an output shaft of the feed driver is connected to a rotating wheel, wherein the rotating wheel is provided with an eccentric shaft, which is connected to the feed channel via a linkage rod;
wherein the linkage rod is provided with an R-shaped hole and a triangular hole, wherein the eccentric shaft is movably connected to the linkage rod via the R-shaped hole, wherein the feed channel is provided with a connecting pin which is rotatably connected to the linkage rod through the triangular hole.

11. The pneumatic food ejector according to claim 9, wherein an upper portion of the feed channel is provided with a movable baffle and a first driver which is configured to drive the baffle to rotate, wherein the position of the movable baffle is below the upper end surface of the feed channel.

12. The pneumatic food ejector according to claim 9, wherein a lower portion of the feed hopper is provided with an agitating member, wherein the agitating member comprises a second driver and an agitating blade connected to an output shaft of the second driver, wherein the agitating component is electrically connected to the controller.

13. The pneumatic food ejector according to claim 9, wherein the pneumatic food ejector further comprises a base and a driving device disposed on the base, wherein the driving device is configured to rotate the housing, the feeding device, pneumatic ejection device, cleaning device, and ejection channel which are all housed in the housing, along an axis of the housing that is perpendicular to the ground.

14. The pneumatic food ejector according to claim 13, wherein the driving device comprises a third driver, a rotating shaft, a first gear, and a second gear, wherein an output shaft of the third driver is connected to the first gear, and the first gear is meshed with the second gear, wherein the second gear is sleeved on the rotating shaft and is fixedly connected to a rotational bearing which is provided on the rotating shaft;
wherein the axis of the rotating shaft and the axis of the housing which is perpendicular to the ground lie along the same straight line.

15. The pneumatic food ejector according to claim 14, wherein the base includes a fixed base and a rotating base, wherein the rotating seat is disposed above the fixed base and is connected thereto via a rotating shaft, wherein the axis of the rotating shaft and the axis of the fixed base lie along the same straight line;
wherein the driving device comprises a third driver, a rotation shaft, a first gear, and a second gear, wherein an output shaft of the third driver is connected to the first gear, and the first gear is meshed with the second gear, wherein the second gear is sleeved on the rotating shaft and is fixedly connected to a rotational bearing which is provided on the rotating shaft;
wherein the third driver and the first gear are mounted on the rotating base, while the rotation shaft and the second gear are mounted on the fixed base, wherein the third driver and the first gear rotate about the axis of the rotation shaft;
wherein the housing and the feeding device, pneumatic ejection device, and cleaning device which are all disposed in the housing, are mounted on the rotation base.
